(19) Europäisches Patentamt

European Patent Office

Office européen des brevets

(11) **EP 1 293 961 B1**

(12) **EUROPEAN PATENT SPECIFICATION**

(45) Date of publication and mention
of the grant of the patent:
**17.11.2004 Bulletin 2004/47**

(51) Int Cl.⁷: **G10L 15/02**, G10L 11/00

(21) Application number: **02080225.2**

(22) Date of filing: **12.03.1999**

(54) **A signal processing method to analyse transients of a speech signal**

Signalverarbeitungsverfahren zur Analyse von Sprachsignal-Transienten

Procédé de traitement de signaux pour l'analyse des transitoires de signaux vocaux

(84) Designated Contracting States:
**AT BE CH DE DK ES FI FR GB IE LI NL SE**

(30) Priority: **13.03.1998 DK 36198**

(43) Date of publication of application:
**19.03.2003 Bulletin 2003/12**

(62) Document number(s) of the earlier application(s) in
accordance with Art. 76 EPC:
**99907338.0 / 1 062 658**

(73) Proprietor: **LEONHARD, Frank Uldall
2800 Lyngby (DK)**

(72) Inventor: **LEONHARD, Frank Uldall
2800 Lyngby (DK)**

(74) Representative: **Sigh, Erik et al
Zacco Denmark A/S
Hans Bekkevolds Allé 7
2900 Hellerup (DK)**

(56) References cited:
**WO-A-94/25958          WO-A-97/09712
GB-A- 2 213 623          US-A- 4 688 256**

**Description**

The present invention relates to a method for determination of a parameter of a system generating a signal containing information about the parameter.

The method may be used for identification of sound or speech signals, such as in speech recognition, or for quality measurement of audio products or systems, such as loudspeakers, hearing aids, telecommunication systems, or for quality measurement of acoustic conditions. The method of the present invention may also be used in connection with speech compression and decompression in narrow band telecommunication.

The method may also be used in analysis of mechanical vibrations generated by a manufactured device during operation e.g. for detection of malfunction of the device.

The method may further be used in electrobiology for example for analysis of neuroelectrical signals such as analysis of signals from an electroencephalograph, an electromyograph, etc.

BACKGROUND OF THE INVENTION

The three documents

HALIJAK C A et al.: "Simple Consequences of the Finite Time Laplace Transform Analysis of the Periodically Reversed Switched Capacitors", CIRCUITS, SYSTEMS, AND SIGNAL PROCESSING, 1985, USA, vol. 4, no. 4, pages 503-511, XP-002105446, ISSN 0278-081X;

BARRETT T W: "The Cochlea as Laplace Analyzer for Optimum (Elementary) Signals", ACUSTICA, Feb. 1978, WEST GERMANY, vol. 39, no. 3, pages 155-172, XP-002105445, ISSN 0001-7884; and

HARBOR R D et al.: "THE LAPLACE TRANSFORM", ENERGY AND INFORMATION TECHNOLOGIES IN THE SOUTHEAST, Columbia, April 9-12, 1989, vol. 1, 9 April 1989, pages 376-379, XP-000076824, IEEE;

offer relevant background art as regards the Laplace transform.

Prior art methods of signal processing are based on a short time Fourier transform of signals and it is assumed that the signals are steady state signals.

In steady state analysis the signal is assumed stationary in the period the signal is analysed and the steady state spectrum is calculated.

In real life steady state signals do not occur and steady state analysis does not provide sufficient knowledge of phenomena within various scientific and technological fields. Consider for example speech analysis. The human ear has the ability to simultaneously catch fast sound signals, detect sound frequencies with great accuracy and differentiate between sound signals in complicated sound environments. For instance it is possible to understand what a singer is singing in an accompaniment of musical instruments.

It is assumed that the cochlea in the human ear can be regarded as comprising a large number of band-pass filters within the frequency range of the human ear.

The time response $f(t)$ for one band-pass filter due to an excitation can be separated into two components, the transient response, $f_t(t)$, and the steady state response, $f_s(t)$, $f(t)=f_t(t)+f_s(t)$.

Traditional signal processing is based on the steady state response $f_s(t)$, and the transient response $f_t(t)$ is assumed to vanish very fast and to be without importance for the perception, see for example "Principles of Circuit Synthesis", McGraw-Hill 1959, Ernest 5. Kuh and Donald O. Pederson, page 12, lines 9-15, where it is stated that: "only the forced response is considered while the response due to the initial state of the network is ignored".

Thus, when students are introduced to the world of signal analysis, they learn that the transient response, i. e. the response due to the initial state of the network should be ignored because it vanishes within a very short period of time. Furthermore, it is rather difficult to analyse these transient signals by use of traditional linear methods of analysis.

The ability of the human ear to hear very short sounds and at the same time detect frequencies with great accuracy is in conflict with the traditional filterbased spectrum analysis. The time window (twice the rise time) of a bandpass filter is inversely proportional to the bandwidth, $tw=2/(f_u-f_l)$,

where $f_l$ is the lower cut-off frequency and $f_u$ is the upper cut-off frequency.

Thus, if a rise time of 5 ms is required the consequence is that the frequency resolution is no better than 400 Hz.

As the detection of these transients is in conflict with a high frequency resolution, the detecting by the human ear of these transients must take place in an alternative manner. It has not been examined how the human ear is able to detect these signals, but it might be possible that the cochlea, when no sounds are received, is in a position of rest, where the cochlea will be very broad-banded. When a sound signal is received, the cochlea may start to lock itself to the frequency component or components within the signal. Thus, the cochlea may be broad-banded in its starting position, but if one or more stable frequencies are received the cochlea may lock itself to this frequency or these frequencies with a high accuracy.

Today it is known that the nerve pulses launched from the cochlea are synchronized to the frequency of a tone if the frequency is less than about 1.4 kHz. If the frequency is higher than 1.4 kHz the pulses are launched randomly and less than once per cycle of the frequency.

Signal processing based on filter bank spectrum analysis is disclosed in GB 2 213 623, which describes a system for phoneme recognition. This system comprises detecting means for detecting transient parts of a voice signal, where the principal object of the transient detection is the detection of a point where the speech spectrum varies most sharply, namely, a peak point. The detection of the peak points is used for more precise phoneme segmentation. The transient analysis of GB 2213623 is based on a spectrum analysis and the change in the spectrum, which is very much different from the transient analysis of the present invention, which is based on a direct transient detection in the time domain.

SUMMARY OF THE INVENTION

The present invention provides a method of analysing an input signal as defined by claim 1.

The present invention provides an approach, which is different in principle from all known methods for processing signals. The approach taken and some of the results obtained will be explained by way of an example in the context of analysis of speech signals.

Speech is produced by means of short pulses generated by the vocal chords in the case of voiced speech and by friction in the vocal tract in the case of unvoiced speech. The pulses are filtered by the vocal tract that acts as a time-varying filter. The output response will consist of quasi steady state terms and also transient terms. The quasi steady state terms will only be damped slightly in the period before the next pulse is generated. The transient terms will be sufficiently damped in the time period before the next pulse is generated.

The speech signal is often assumed to have only quasi steady state terms in the period or time window of the analysis, typically 20-30 ms.

The placement of formants, the formants being energy bands in the short time power spectrum, are calculated by means of a short time spectrum analysis has previously been assumed decisive for speech intelligibility, together with voiced/unvoiced detection, the pitch and the quasi steady state power.

However, a number of observations, which has been performed within the field of auditory perception research, does not conform to the previous assumptions:

Why is it possible to understand and identify a deep male voice through communication channels that have a higher cut-off frequency than the male pitch.

The only difference between the pronunciation of the letters: e, b, d is in the first 1-3 ms of the voice signal and this information will be lost if the analysis have a time window of 20-30 ms.

How can the absolute placement of these formants be decisive when their placement is quite different for different people, particularly between small children and large males.

Why is distortion dominated by odd order harmonics and caused by cross-over distortion in a class B amplifier much more disturbing than distortion dominated by even order harmonics caused by amplitude distortion in a class A amplifier.

The short time power spectrum will not distinguish frequencies from different sources, and tones generated by other sources than the speech signal will act like false formants.

Why does a signal consisting of three tones with the same frequencies as the formants for a vowel not give the slightest perception of the vowel at all? The signal just sounds like three separate tones.

Why is the ear very sensitive to frequency changes of a signal up till about 1000 Hz, changes of +/- 3 Hz can be detected. For frequencies above 1000 Hz, the sensitivity is much smaller.

The research performed by the present applicant leads to suggest that the ear is tone dominant until about 1.4 - 1.6 kHz and transient dominant above. Tone dominant means that the pulses launched from the hair cells as a response to a tone signal are synchronised to the tone signal. Transient dominant means, in the present context, that the hair cells are activated by changes of the energy with rise and fall times of at most 2 ms typical caused by transient pulses.

Regarding speech signals, it is assumed that the quasi steady state terms are in the tone dominant interval of the ear and that the transient terms are in the transient dominant interval. It is believed that the transient terms are very important for speech intelligibility. The transient terms are seen as transient pulses in the speech signal. The rise time and the shape of leading and lagging edges of the envelope of transient pulses in the terms of a profile of damped frequencies describes the sound picture. The shape of the leading and lagging edges, the dynamic changes, change of amplitude, of the transient pulses, voiced/unvoiced detection and the changes of pitch are decisive for speech recognition.

This approach provides a number of advantages with respect to explaining the earlier mentioned speech perception observations.

A natural explanation as to why it is possible to understand and identify a deep male voice through communication channels that have a higher cut-off frequency than the male pitch is provided. The pitch can be detected as the period between transient pulses.

The absolute placement of formants is not decisive. The damped frequencies profile of the shape of the transient pulse envelope is dominated by damped difference frequencies of the transient terms.

Distortion caused by cross-over distortion in a class B amplifier generates abrupt energy changes (unwanted transients) which are much more disturbing than distortion caused by amplitude distortion in a class A amplifier which do not generate the same abrupt energy changes.

Robust data- or telecommunication is based on modulation. The envelope of transient pulses is a kind of amplitude modulation, transient or impulse response modulation, and will have the same advantages.

It is unlikely that frequencies from other sources will cause interference patterns with the speech signal that gives energy changes with time constants and shapes in the range that is decisive for speech intelligibility. This means that transient modulation will be robust in noisy environments and communication channels.

The ear is probably very sensitive to changes of a frequency up till about 1000 Hz because the nerve pulses are synchronised to the frequency and the period between the pulses is a measure for the frequency. In the high frequency range, where the pulses are not synchronised to the frequency, only placement of the frequency in the cochlea is a measure for the frequency.

According to the invention it has for example been found that the signal information relevant to recognition of speech is present in a transient part of the speech signal. Thus, the method of the present invention may involve a separation of the transient part of an auditory signal, a generation of a transient pulse corresponding to the transient part, and analysis of the shape of the pulse. In an auditory signal, the corresponding transient pulse may be repeated with time intervals, and the time interval of these periodic transient pulses is normally also analysed or determined.

In real life, the human ear reacts to energy changes at high frequencies in order to recognise phonemes or sound pictures. But in the present method transient pulses corresponding to the energy changes observed by the ear are extracted at these high frequencies, wherefore the transient pulses preferably are transformed to the low frequency range still maintaining the distinct features of the sound pictures or phonemes. Thus, by using the principles of the invention, it is possible to obtain distinct features within auditory signals by examining the transformed low frequency signals.

The invention relates to the use of the shape of energy changes of a signal for identifying or representing features of the system generating the signal for example in recognition of sound features which can be perceived by an animal or human ear as representing a distinct sound picture are determined.

The method of the present invention provides an expression for the transient conditions of the auditory signal. The method comprises a band-pass filtration of an auditory signal within the frequency range of the human ear and a detection of a low-pass filtered envelope, which envelope then can be analysed with known methods of signal analysis. The envelope is an expression of the transient part of the signal.

The method of signal analysis, which should be used when analysing the envelope, and the characteristics of the band-pass filter, which should be selected, will depend on the purpose of the analysis. The purpose may be speech recognition, quality-measurement of audio products or acoustic conditions, and narrow band telecommunication.

The invention also relates to a system for processing a signal to reduce the bandwidth of the signal with substantial retention of the information of the signal. The system may further comprise means for extracting the transient component of the auditory signal, and it may comprise means for detecting an envelope of the transient component.

A signal may be separated into a sum of impulse responses generated by poles and zeroes in the system that has generated the signal, if the time between the excitation pulses are sufficient long compared to the duration of the impulse responses for the system.

In WO 94/25958 it is shown that the envelope of the transient component in a speech signal is very important for its recognition and it is shown that the envelope of the impulse response will contain exponential functions and difference frequencies defined by the impulse response.

A method based on damped sinus functions to extract important features from the envelope signal is described, and examples where the method is used on speech signals shows that the features are important in speech analysis.

Before entering into a more detailed explanation of features of the method of the invention, a few definitions will be given:

In short time analysis the transient component in a signal is a matter of definition. For auditory signals, the idea is to obtain an expression that gives a response corresponding to the response in the cochlea to an abrupt change in the signal energy. An abrupt change in the signal energy corresponds to the transient component in the auditory signal. Thus, in the present context, the term "transient component" designates any signal corresponding to an abrupt energy change in an auditory signal. The transient component holds the signal information to be analysed and in order to analyse this information the transient component may be transformed to a corresponding transient pulse having a distinct shape. Thus, in the present context, the term "transient pulse" refers to a pulse having a distinct shape and substantially holding the information of the transient component of the auditory signal and thus corresponding to an abrupt change in the energy of the auditory signal. As mentioned above the transient part of a sound signal may be repeated with time intervals and thus, in the present context, the term "periodic" when used in combination with a transient component, response or pulse designates any transient component, response or pulse being repeated with intervals.

The term "shape" designates any arbitrary time-varying function (which is time-limited or not time-limited) and which, within a given time interval $T_p$ has a distinctly different amplitude level in comparison with the amplitude level outside the interval. Thus, $T_p$ is the duration of the shape function when the shape function is time-limited, or the duration of the part of the function which has a distinctly different amplitude level in comparison with the amplitude level outside the time interval.

In order to extract information from the shape of the energy changes, one broad aspect of the invention relates to represent the shape of the energy changes by the short time Laplace transform of a transient pulse of the signal. However, several methods can be applied in order to obtain a transient pulse corresponding to the change in energy, but it is preferred that an envelope detection is being used, where the envelope preferably should be detected from a transient response of the energy change in the auditory signal.

The energy change representing the distinct sound picture can be a phoneme or vowel or any other sound which gives a sudden energy change in an auditory signal.

It is also an aspect of the invention to provide a method for identifying, in an auditory signal, energy changes which can be perceived by an animal or human ear as representing a distinct sound picture, the method comprising comparing the shape of energy changes of the signal with predetermined energy change shapes representing distinct sound pictures. For the identification it is preferred that the shape of the energy changes are represented by the shape of a transient pulse of the signal, and it is furthermore preferred that the shape of the transient pulse is obtained by an envelope detection of a transient response of the energy change in the auditory signal.

The invention also relates to a method for processing a signal so as to reduce the bandwidth of the signal with substantial retention of the information of the signal, comprising extracting a transient part of the signal. The method may further comprise detecting an envelope of the transient part of the signal.

Known methods of processing signals are based on a short time Fourier transform of signals, and it is assumed that the signals are steady state signals.

In steady state analysis the signal is assumed stable in the period the signal is analysed, and the steady state spectrum is calculated.

In WO 94/25958 it is disclosed that transient pulses are important for speech coding and decoding in narrow band communication, for speech recognition and synthesis, and for sound quality in auditory, products (i.e. loudspeakers, amplifiers and hearing aids).

An important part of a transient signal is the exponential functions or damping ratios or time constants. The damping ratio is the reason that the impulse response has a finite duration. The fact that the transient signal is important for auditory perception indicates that the response from the hair cells is dependent on the time constants. If this is the case, it is possible that the damping ratios in the response from nerve cells in general are important for the human nerve system.

Transient signals are also important in many other applications, among others signals generated by impacts from defects in rolling bearings and gearboxes.

Based on the transient signal, it is possible to determine the natural time constants and frequencies in the system generating the signal. Further it is possible to determine the excitation pulses of the system.

BRIEF DESCRIPTION OF THE DRAWINGS

Fig. 1        shows a time-domain representation of a linear time-invariant system,

Fig. 2        shows the impulse response of a Butterworth low-pass filter of 3. order and a cut-off frequency at 700 Hz,

Fig. 3        shows the response with the filter relaxed for $t < 0$ and with a 4000 Hz tone as input at $t \geq 0$,

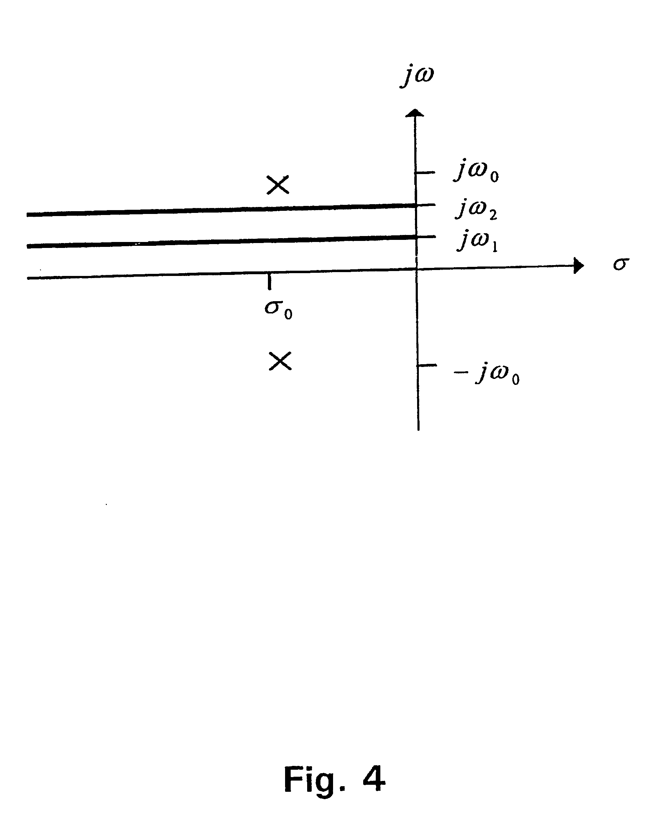

Fig. 4        shows the s-plane with poles and the zero for $H(\sigma,\omega)$,

Fig. 5        shows $H(\sigma,\omega)$ for $\omega_1$ and $\omega_2$ analysed parallel with the $\sigma$ axis,

Fig. 6          shows transient characteristics in speech signals,

Figs. 7-12     show processed speech signals,

Fig. 13         shows a schematic of a filter bank according to the present invention.

DETAILED DESCRIPTION OF THE INVENTION

The importance of the transient part of a signal has been an overlooked phenomenon in signal analysis.

The response of a linear system to either an impulse or a step function is defined by its transient response properties.

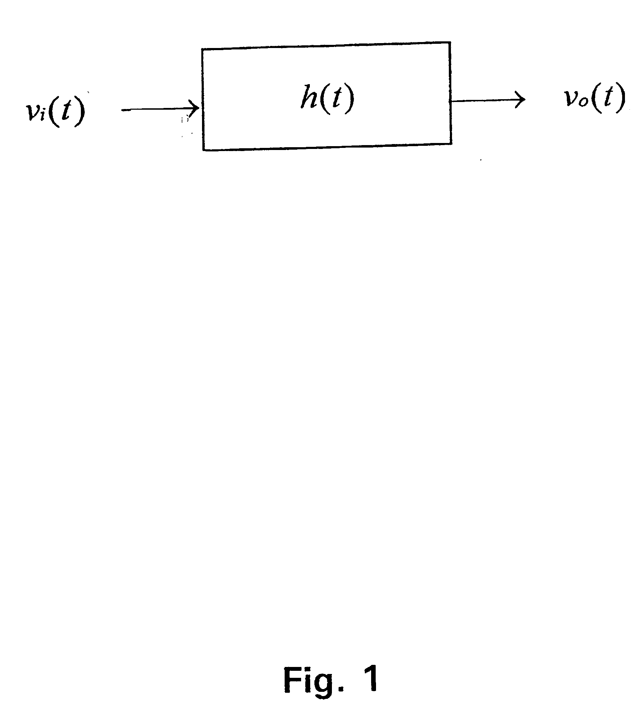

The relationship between the input and the output for the linear time-invariant system shown in Fig. 1 can be written as the convolution of the input signal and the impulse response of the system:

$$v_o(t) = \int_{-\infty}^{t} v_i(x)h(t-x)dx \qquad (1)$$

If the system is initially relaxed and the input signal $v_i(t)$ is zero for $t < 0$ then the lower integration limit of Eq. (1) can be replaced with zero. Eq. (1) then shows the important role played by the impulse response in terms of the actual signal processing that is performed by the system. It states that the input signal is weighted or multiplied by the impulse response at every instant in time and, at any specific point in time, the output is the summation or integral of all past weighted inputs.

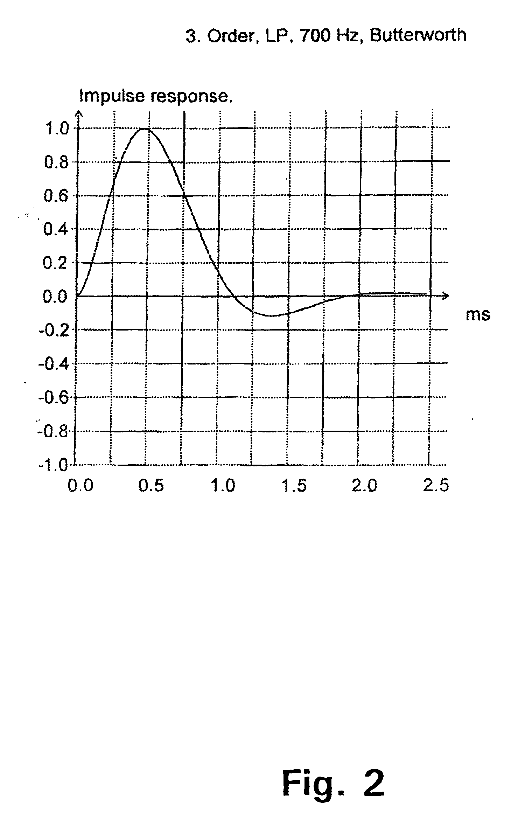

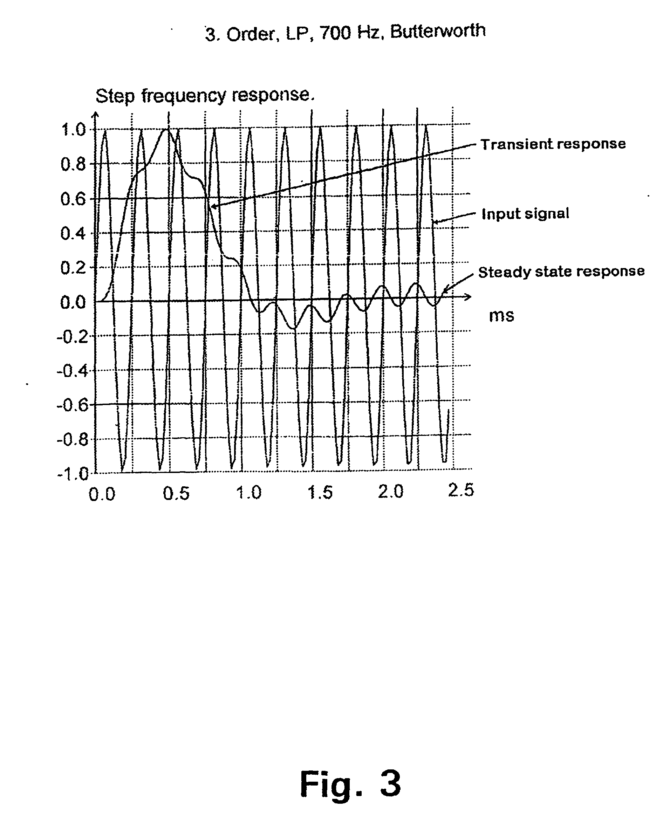

The impulse response of a real system has a finite duration and the transient response has the same duration. Fig. 2 shows the impulse response of a Butterworth low-pass filter of third order and a cut-off frequency at 700 Hz. Fig. 3 shows the response with the filter relaxed for $t < 0$ and with a 4000 Hz tone as input at $t \geq 0$.

In many processes $v_i(t)$ will be a pulse with a short duration and $v_i(t) \approx 0$ before the next pulse will be generated.

The Laplace transform of a signal $v(t)$ is defined by

$$L(s) = \int_{0}^{\infty} v(t)e^{-st}dt \qquad (2)$$

$$= \int_{0}^{\infty} v(t)e^{-(\sigma+j\omega)t}dt$$

If $v(t)$ is the impulse response $h(t)$ for a system with 2 complex poles

$$h(t) = e^{-(\sigma_0+j\omega_0)t} + e^{-(\sigma_0-j\omega_0)t}, \, t > 0 \qquad (3)$$

and 0 for $t < 0$ and $s \neq -(\sigma_0 \pm j\omega_0)$.

The Laplace transform is

$$H(s) = \frac{s + \sigma_0}{(s + \sigma_0 + j\omega_0)(s + \sigma_0 - j\omega_0)}$$

or

$$H(\sigma,\omega) = \frac{\sigma + \sigma_0 + j\omega_0}{(\sigma + \sigma_0 + j(\omega + \omega_0))(\sigma + \sigma_0 + j(\omega - \omega_0))} \tag{4}$$

From Eq. (4) it is seen that for $(\sigma,\omega) \to (-\sigma_0,\pm\omega_0)$, $H(\sigma,\omega) \to \pm\infty$.

This is a well-known phenomenon and a logical consequence of this is as follows:
If the signal analysed is dominated by the impulse response of the system generating the signal, it is possible to determine the natural time constants and frequencies for the system.

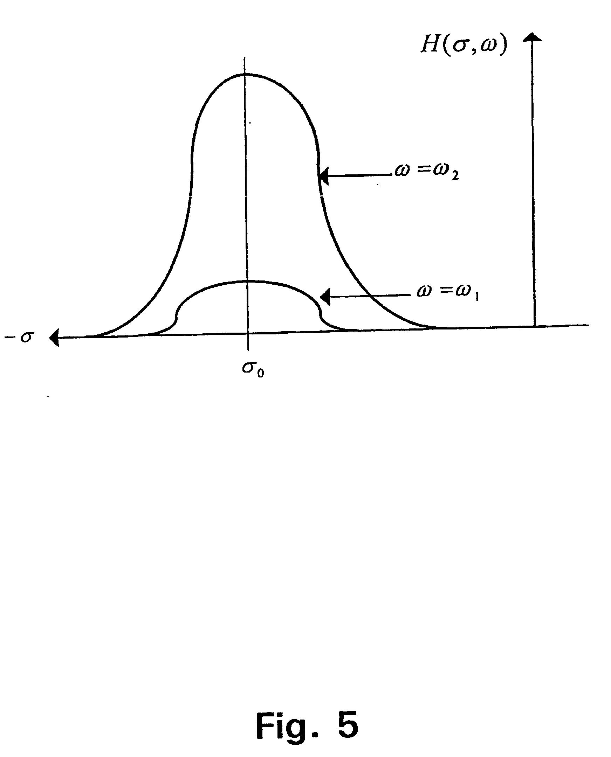

Fig. 5 shows a plot of $H(\sigma,\omega)$ for $\omega=\omega_1$ and $\omega=\omega_2$. Analysing a signal along or parallel with the $j\omega$ axis will give a frequency profile for a given $\sigma$.

Analysing a signal along or parallel with the $\sigma$ axis will give a time constant profile for a given $j\omega$.

If a signal has a time constant profile with significant variations for specific frequencies, the signal is transient dominated. Opposite if the signal does not vary significantly for any frequency, the signal is steady state dominated.

A short time Laplace transform is defined by:

$$L(\sigma,\omega,t) = \int_0^t v_i(t - \lambda)e^{-(\sigma+j\omega)\lambda}d\lambda \tag{5}$$

in which $v_i$ is the signal, L is the transformed signal, $\sigma$ is a time constant, and $\omega$ is an angular frequency.

It is not possible to calculate the short time Laplace transform in the same way as DFT in the discrete time domain because two arbitrary exponential functions, $e^{at}$ and $e^{bt}$, are not orthogonal with respect to each other.

The short time Fourier analysis in the analogue time domain is based on a filter bank method. In the following an equivalent method will be developed for the Laplace transform.

From Eq. (1) and Eq. (3):

$$v_o(t) = \int_0^t v_i(t - \lambda)e^{-(\sigma+j\omega)\lambda}d\lambda$$

$$+ \int_0^t v_i(t - \lambda)e^{-(\sigma-j\omega)\lambda}d\lambda \tag{6}$$

$$v_o(t) = V(\sigma,\omega,t) + V^*(\sigma,\omega,t) = u(t) + u^*(t)$$

where $u^*(t)$ is the complex conjugate of $u(t)$ and we have

$$\mathrm{Re}\left[L(\sigma,\omega,t)\right] = \tfrac{1}{2}v_o(t) \tag{7}$$

From Eq. (6) and Eq. (7) it is seen that filtering the signal $v_i(t)$ by a filter with the impulse response $h(\sigma,\omega,t)$ with 2 complex poles will represent the reel part of the short time $L(\sigma,\omega,t)$ transform.

If we let $v_i(t)$ be equal to the impulse response of a single pole we have

$$u(t) = \int_0^t k e^{-(\sigma_0 + j\omega_0)(t-\lambda)} e^{-(\sigma + j\omega)\lambda} d\lambda$$

$$= k e^{-(\sigma_0 + j\omega_0)t} \int_0^t e^{(\sigma_0 + j\omega_0)\lambda} e^{-(\sigma + j\omega)\lambda} d\lambda \qquad (8)$$

$$= \frac{k(e^{-(\sigma+j\omega)t} - e^{-(\sigma_0 + j\omega_0)t})}{(\sigma - \sigma_0) + j(\omega - \omega_0)}$$

and from Eq. (7) we have

$$v_o(t) = -\frac{2k(\sigma - \sigma_0)(e^{-\sigma t}\cos(\omega t) - e^{-\sigma_0 t}\cos(\omega_0 t))}{(\sigma - \sigma_0)^2 + (\omega - \omega_0)^2}$$

$$+ \frac{2k(\omega - \omega_0)(e^{-\sigma t}\sin(\omega t) - e^{-\sigma_0 t}\sin(\omega_0 t))}{(\sigma - \sigma_0)^2 + (\omega - \omega_0)^2} \qquad (9a)$$

or

$$\frac{v_o(t)}{2k} = \frac{e^{-\sigma_0 t}((\sigma-\sigma_0)\cos(\omega_0 t) - (\omega - \omega_0)\sin(\omega_0 t))}{(\sigma - \sigma_0)^2 + (\omega - \omega_0)^2}$$

$$\frac{-e^{-\sigma t}((\sigma-\sigma_0)\cos(\omega_0 t) - (\omega - \omega_0)\sin(\omega t))}{(\sigma - \sigma_0)^2 + (\omega - \omega_0)^2} \qquad (9b)$$

Eq. (9a) and (9b) are not defined for $(\sigma,\omega) = (\sigma_0,\omega_0)$ but from (8) we have in this case

$$u(t) = k e^{-(\sigma_0 + j\omega_0)t} \int_0^t d\lambda$$

$$= kt e^{-(\sigma_0 + j\omega_0)t}$$

and

$$v_o(t) = 2kt e^{-\sigma_0 t}\cos(\omega_0 t) \qquad (10)$$

and we have $v_o(t) \rightarrow 0$ for $t \rightarrow \infty$.

Eq. (9) shows that the gain is inversely related to $\sigma - \sigma_0$ and to $\omega - \omega_0$, and when $(\sigma_0,\omega_0)$ is far from $(\sigma,\omega)$ and $e^{-\sigma t} - e^{-\sigma_0 t}$ is small, $v_o(t) \approx 0$. For $(\sigma_0,\omega_0) \leftarrow (\sigma,\omega)$ $v_o(t)$ will have Eq. (10) as the limit. It is not immediately to see if Eq. (9) has the maximum energy for $(\sigma_0,\omega_0) \leftarrow (\sigma,\omega)$.

In the DC domain Eq. (9) can be written as

$$v_o(t) = 2k\frac{(e^{-\sigma_0 t} - e^{-\sigma t})}{\sigma - \sigma_0} \qquad (11)$$

The maximum for $v_o(t)$ can be found as follows

$$\frac{dv_o}{dt} = \frac{1}{\sigma - \sigma_0}\left[\sigma e^{-\sigma t} - \sigma_0 e^{-\sigma_0 t}\right] = 0$$

when

$$t_m = \frac{\log(\sigma) - \log(\sigma_0)}{\sigma - \sigma_0} \qquad (12)$$

and Eq. (11) will have the maximum for this value.

It can be shown that $t_m \to \frac{1}{\sigma_0}$ when $\sigma \to \sigma_0$.

When $\sigma \approx \sigma_0$ we will have the approximated maximum with $t = \frac{1}{\sigma_0}$

$$v_o\left(\frac{1}{\sigma_0}\right) = 2k\frac{(e^{-1} - e^{-\frac{\sigma}{\sigma_0}})}{\sigma - \sigma_0} \qquad (13)$$

From Eq.(13) it can be shown that

$$v_o \to \frac{2ke^{-1}}{\sigma_0} \text{ for } \sigma \to \sigma_0$$

In Eq. (11) $e^{-\sigma_0 t}$ represent the signal to be analysed and $e^{-\sigma t}$ the filter. Table 1 shows the result with a filter having $\sigma = 100$ s$^{-1}$ and the signal varying from 1 to 10000 s$^{-1}$

It is not surprising that the convolution acts as a low-pass filter. The important fact is that the exponential function in the DC domain in some way acts as frequencies do in the frequency domain.

In table 1 $v_{ol}(t_m)$ is the result of a convolution where the signal is differentiated. The result is, as expected, a high-pass filter.

If we look on Eq.(9a) without exponential functions it can be written as

$$v_0(t) = \frac{2k(\sin(\omega t) - \sin(\omega_0 t))}{\omega - \omega_0} \qquad (14)$$

it is seen that for $\omega \to \infty$ we will have $v_o \to 0$ .

Table 1

| $v_o(t_m)$ is given by Eq.(11, 12) and normalised by $\sigma$ and 2k. $v_{ol}(t_m)$ is a convolution where the signal is differentiated and normalised by 2k. | | | |
|---|---|---|---|
| $\sigma : 100$ s$^{-1}$ | | | |
| $\sigma_0$ | $t_m$ | $v_o(t_m)$ | $v_{ol}(t_m)$ |
| s$^{-1}$ | s | | |
| 1 | 0,046516871 | 0,954548457 | 0,009545485 |
| 10 | 0,025584279 | 0,774263683 | 0,077426368 |

Table 1   (continued)

| $v_o(t_m)$ is given by Eq.(11, 12) and normalised by σ and 2k. $v_{ol}(t_m)$ is a convolution where the signal is differentiated and normalised by 2k. | | | |
|---|---|---|---|
| σ : 100 s⁻¹ | | | |
| $σ_0$ | $t_m$ | $v_o(t_m)$ | $v_{ol}(t_m)$ |
| s⁻¹ | s | | |
| 100 | 0,010000000 | 0,367879441 | 0,367879441 |
| 1000 | 0,002558428 | 0,077426368 | 0,774263683 |
| 10000 | 0,000465169 | 0,009545485 | 0,954548457 |

For $ω \ll ω_0$ we will have

$$v_o \cong \frac{2k(\sin(ωt) - \sin(ω_0 t))}{ω_0} \qquad (15)$$

It can be shown that for $ω \to ω_0$ we will have

$$v_o(t) \to 2kt \cos(ω_0 t) \qquad (16)$$

As expected, this result is unstable.

In transient analysis only the beginning of the signal is of interest, and if $ω_0 \gg 1$ Eq. (14) will act as a band-pass filter.

Speech processing is based on fast energy pulses generated by the vocal cords or by friction in the articulation channel weighted by the impulse response in the articulation channel. The rise time for the excitation pulses has to be sufficient faster than the rise time of the energy of the impulse response.

The shape of energy pulses are important features in speech. If the time between the pulses is periodical it is voiced speech, and if not it is unvoiced speech. For some phonemes abrupt changes in the energy pulses are important.

From WO 94/25958 it is known that the shape of the energy pulses are important for speech recognition, especially the leading edge. In the following a method to extract features will be developed based on an envelope detection.

The convolution expressed in Eq. (9) can be regarded as a response from 2 poles in the articulation channel excited by an impulse. If $σ_0 \approx σ$ we have from Eq. (9a)

$$v_o(t) \cong \frac{e^{-σt}}{(ω - ω_0)} \big(\sin(ωt) - \sin(ω_0 t)\big) \qquad (17)$$

The envelope is defined as

$$e(t) = \sqrt{u^2(t) + \hat{u}^2(t)}$$

where

$$\hat{u}(t) = u(t) * \frac{1}{πt}$$

is the Hilbert Transform.

The envelope of Eq. (17) is then

$$e_o(t) = \frac{e^{-\sigma t}}{|\omega - \omega_0|} \sqrt{(\sin(\omega t) - \sin(\omega_0 t))^2 + (-\cos(\omega t) + \cos(\omega_0 t))^2}$$

$$= \frac{e^{-\sigma t}}{|\omega - \omega_0|} \sqrt{2(1 - \cos(\omega - \omega_0)t)}$$

$$\cong \frac{\sqrt{2}e^{-\sigma t}}{|\omega - \omega_0|}\left(1 - \tfrac{1}{2}\cos((\omega - \omega_0)t)\right) \tag{18}$$

The approximation is acceptable because $|\cos((\omega - \omega_0)t)| \le 1$

As expected the envelope has a component with the difference frequency of the 2 frequencies.

The conclusion is that we can expect to find damped difference frequencies in the envelope of the transient component.

To detect the damped difference frequencies a filter bank is used. The features might be detected as a convolution between the transient pulse and the impulse response of the filters.

In general form the impulse response can be written as

$$h(t) = ke^{-\lambda t}\sin(f(\lambda)t + \phi)$$

Where $\sigma = \lambda$ and $\omega = f(\lambda)$.

In the following analysis $f(\lambda) = 1.5\lambda$, $k=\omega=1.5\lambda$, and $\phi=0$ are selected and we have

$$h(t) = 1.5\lambda e^{-\lambda t}\sin(1.5\lambda t) \tag{19}$$

By selecting $\omega=1.5\sigma$ Eq. (19) will act as a band-pass filter with a low Q in relation to the frequencies. Other ratios $\sigma$ than 1.5 may be selected and it is presently preferred that the ratio $(\omega/\sigma)$ ranges from 0.5 to 2.5. The exponential function gives the advantage that it acts like natural time windows that ensure that the signal is naturally damped. The value of the parameters are selected by studying rise times in important transient pulses and by experiments.

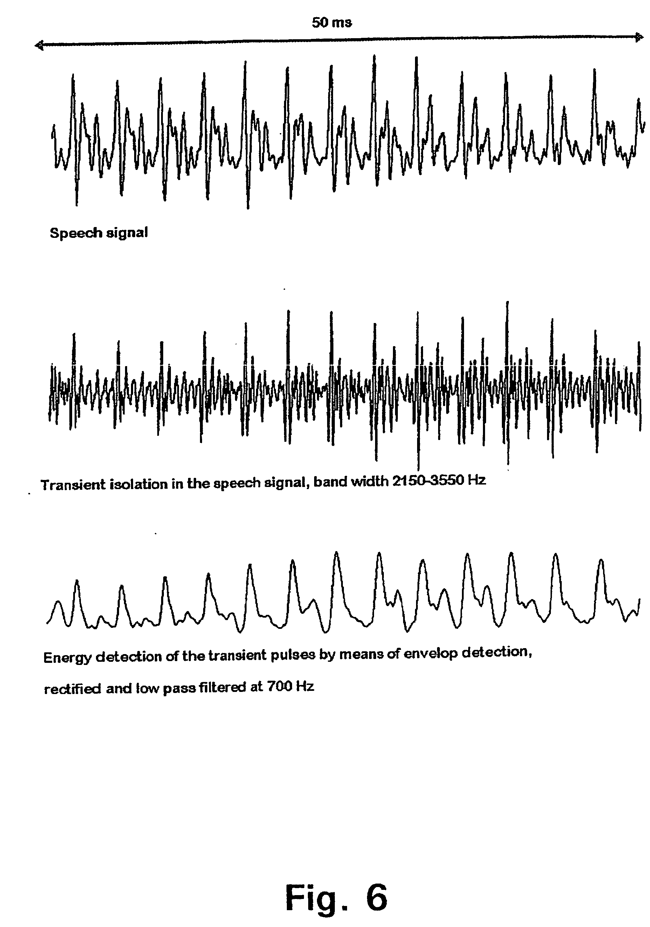

Fig. 6 shows transient characteristics in speech signals. The top figure shows 50 ms of an "a" in "hard key" pronounced by a female.

The second signal is a band-pass filtration of the speech signal. The band-pass filter is a Butterworth filter with 6 poles and a band width from 2150 to 3550 Hz. This frequency band contains important transient pulses in the sensitive frequency interval of the ear.

The third signal is a energy detection of the transient characteristics of the band-pass filtered speech signal. The detection is an envelope detection performed by means of a rectification and a low-pass filtration of the signal. The filter is a Butterworth filter with 3 poles and a cut-off frequency at 700 Hz.

In WO 97/09712 a method for automatically detecting the leading edges is disclosed. The method uses the maximum slope of the leading edge as reference, and the point before the maximum slope where the slope is less than a given threshold (10-20 % of the maximum slope) the leading edge is defined to begin.

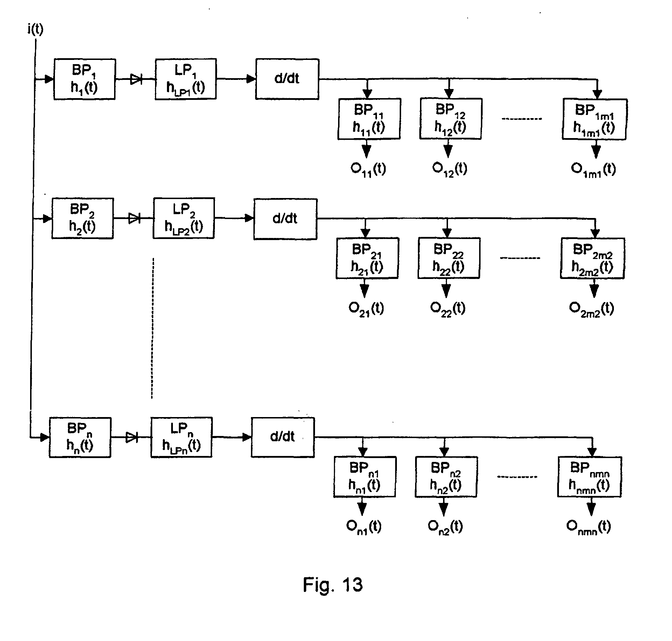

The transient (envelope) signal in Fig. 6 has a DC component, which does not contain any information. Therefore it is preferred that the signal is differentiated before it is analysed e.g. by the filter bank shown in Fig. 13.

In Fig. 13, the filters $(h_1(t), h_2(t),..., h_n(t))$ in the filter bank connected between the input and the envelope detectors are band-pass filters having bandwidths corresponding to the bandwidths of the band-pass filters of the cochlea and having centre frequencies ranging from 1400 Hz to 6500 Hz.

The output signals $o_{ij}(p)$ from the filter bank shown in Fig. 13 are calculated by:

$$h_{ij}(p) = 1.5\lambda_m e^{-\lambda_m p}\sin(\lambda_m p), \qquad i=0,1, ..., N-1$$

$$j=0,1,...,M-1$$

$$h_{ij}(p) = 0, \qquad p < 0$$

$$o_{ij}(p) = \sum_{k=0}^{P-1} t'(k)h_m(p-k), \qquad\qquad p=0,1,...,P-1$$

m=0,1,...,M-1 and M is the number of band-pass filters with a low Q in the filter bank connected between the outputs and the envelope detectors, p = 0,1,...,P-1 is the sample number, t' is the differentiated transient signal, and $\lambda_m$ is the filter bank parameter and it is normalised by the sampling frequency.

In the analysis M is selected to 10 and $1500 \le \lambda'_m \le 12000$ s$^{-1}$, $\lambda'_m$ is not normalised. By this we have $1885 \le \omega_m \le 18850$ s$^{-1}$ or $300 \le f_m \le 3000$ Hz.

This filtering process is not done in the cochlea but in the hair cells or in the nerve system behind the hair cells.

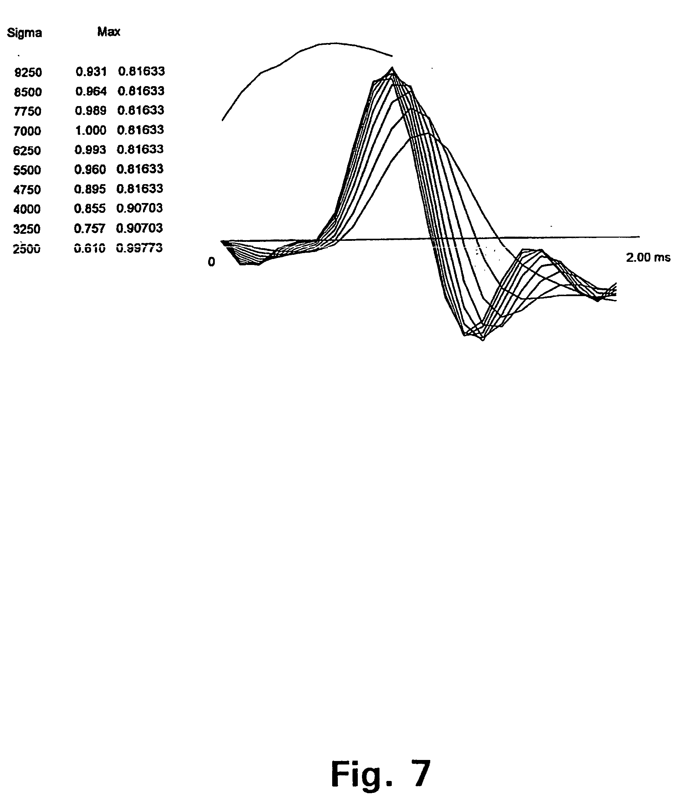

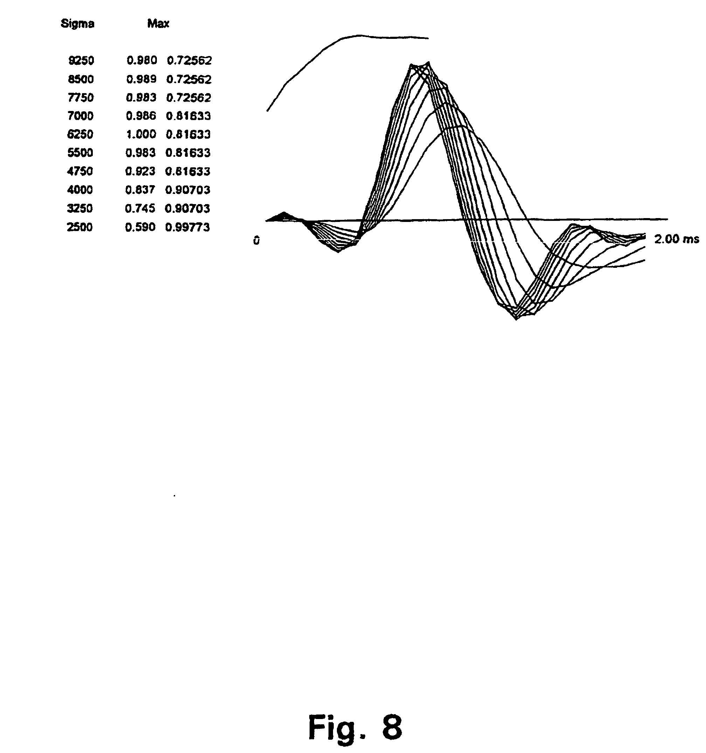

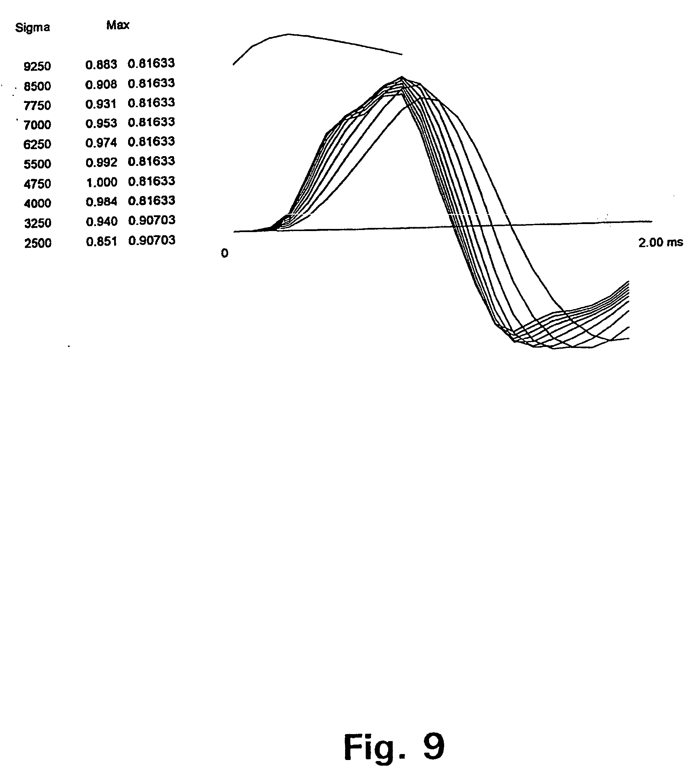

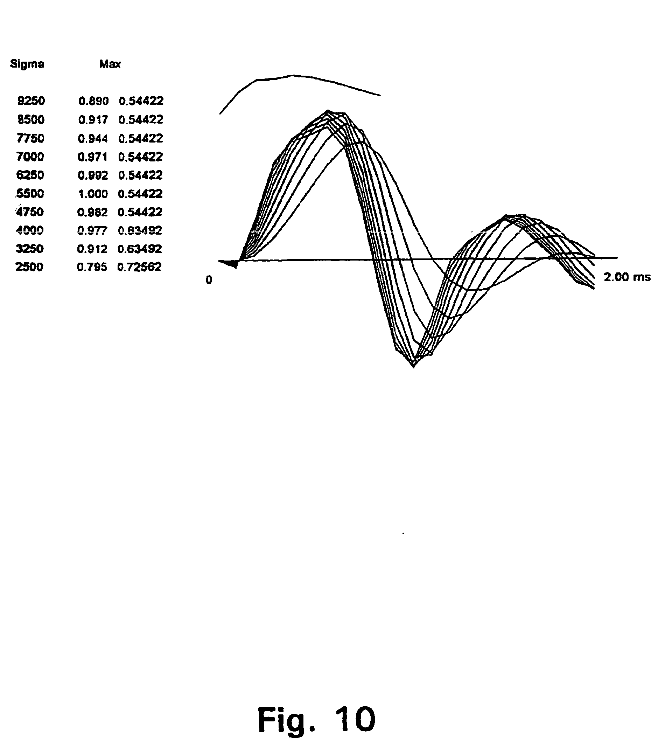

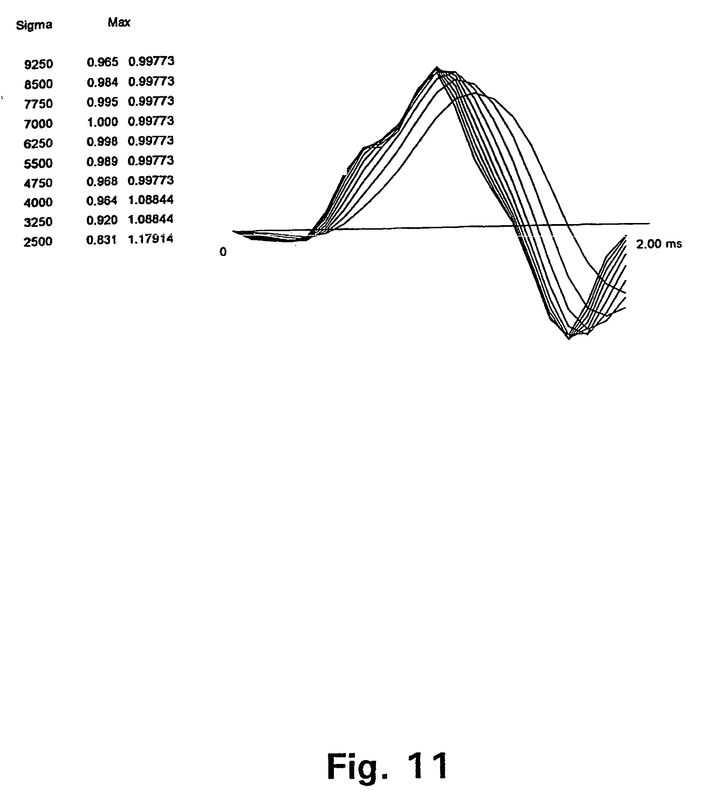

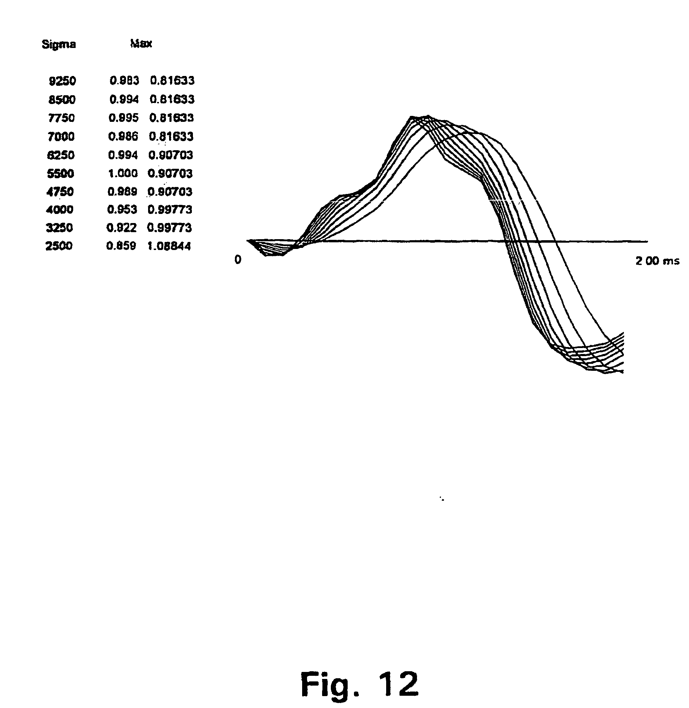

The Figs. 7, 8, 9, 10, 11, and 12 show the output of the processing of transient signals in the vowels "a", "o", "i" in "hard key" and "soft key" pronounced by a female and a male. Further the figures show plots of maxima of the output signals as a function of the time constant σ of the corresponding filter.

The figures show that maximum curves are very much alike for the same vowels, independent of whether a female or male pronounces it.

With a library of templates and a distance measure it is possible to identify the sound picture, and it can be used for speech recognition and narrow band communication.

Thus, according to the invention a method and an apparatus are provided for determination of a parameter of a system generating a signal containing information about the parameter, in which the signal is short time transformed substantially in accordance with

$$L(\sigma,\omega,t) = \int_0^t v_i(t-\lambda)e^{-(\sigma+j\omega)\lambda+\varphi}d\lambda$$

in which $v_i$ is the signal, L is the transformed signal, σ is a time constant ω is an angular frequency, and φ is a phase, or, in accordance with another transformation which will give rise to an L' (σ,ω,t) which in time intervals within which L (σ,ω,t) is larger than 10% of its maximum value is not more than 50% different from the result given by the short time Laplace transformation.

In narrow band communication the transient pulses have to be identified and coded, and the decoder will contain a library of filters with corresponding transient responses. The decoder library could also contain the transient responses.

The present invention also relates to measurement of mechanical vibrations e.g. when testing devices that generate mechanical energy during operation, such as mechanical devices with moving parts, such as compressors for refrigerators, electric motors, household machines, electric razors, combustion engines, etc, etc.

For example, it is known that measurement of vibration generated or sound emitted by a device during operation can be useful for detection of malfunction of the device. Certain failures may generate sound or vibration of specific characteristics that can be recognised.

The method may also comprise steps of classification for classifying a tested device in accordance with the determined parameters into one class of a set of predefined classes. Each predefined class may be defined by a set of upper and lower limits for specific parameters determined according to the method. A device may then be classified as belonging to a certain class if its corresponding parameter values lie within corresponding upper and lower limits of the class.

Each class may correspond to a specific type of failure of the device. For example, shaft imbalance, wheel imbalance, crookedness, imperfections of teeth in cogs, tight bearing, loose bearings, etc, may cause the device to vibrate in different characteristic ways, whereby a characteristic mechanical vibration or sound is generated for each type of failure. The type of failure of the device may then be detected by comparing determined device parameters with corresponding parameter values of various predetermined classes.

The upper and lower limits of a specific class of devices may be determined by testing a set of devices known to belong to that class. For example, the upper limits may be determined as the average of specific parameter values plus three times the standard deviation. Likewise, the lower limits may be determined as the average of parameter values minus three times the standard deviation.

**Claims**

1. A method of analysing an input signal (i(t)) having an input frequency-bandwidth, the method comprising:

   - providing a first plurality of signals each representing a distinct, frequency-bandwidth limited portion of the input signal, and

   for each of the first plurality of signals performing the following step:

   - providing a signal representing an envelope thereof in the time domain,

   **characterized in that** the method further comprises, for each signal representing an envelope:

   - providing a second plurality of signals ($O_{ij}(t)$) each representing a distinct frequency bandwidth-limited portion of the signal representing an envelope.

2. A method according to claim 1 **characterized in that** the method further comprises, for each signal representing an envelope:

   - providing a signal representing the envelope differentiated with respect to time, and
   - for each signal representing an envelope differentiated with respect to time providing the second plurality of signals ($O_{ij}(t)$).

3. A method according to any one of claims 1-2 **characterized in that** each signal representing an envelope is obtained by

   - rectifying the corresponding frequency bandwidth-limited portion of the input signal, and
   - low-pass filtering the rectified signal.

4. A method according to claim 3 **characterized in that**

   - each of the first plurality of signals representing distinct frequency bandwidth-limited portions of the input signal has a bandwidth corresponding to a bandwidth of a bandpass filter of the human cochlea.

5. A method according to claim 4 **characterized in that** the bandwidths of the first plurality of signals have centre frequencies ranging form 1400 Hz to 6500 Hz.

6. A method according to any one of claims 1-5 **characterized in that**

   - each of the second plurality of signals ($O_{ij}(t)$) has a centre frequency in the range from 300 Hz to 3000 Hz.

7. A method according to any one of claims 1-6 **characterized in that** each signal representing an envelope is obtained by performing a Hilbert transformation of the corresponding frequency bandwidth-limited portion of the input signal.

8. Use of the method according to any one of the claims 1-7 for analysing a human speech signal.

9. Use according to claim 8 for identifying vowels in the speech signal.

10. Use of the method according to any one of the claims 1-3 for analysing a signal generated by an industrial product.

**Patentansprüche**

1. Verfahren zur Analyse von einem Eingangssignal (i(t)) mit einer Eingangsfrequenzbandbreite, umfassend:

   - Leistung einer ersten Mehrzahl von Signalen, die je einen unterscheidbaren beschränkten Frequenzbandbreitenanteil des Eingangssignals darstellt, und
     für jedes der ersten Mehrzahl von Signalen, Durchführung vom folgenden Schritt:
   - Leistung eines eine Einhüllende davon darstellenden Signals in dem Zeitbereich,

   **dadurch gekennzeichnet, dass** das Verfahren weiterhin für jedes eine Einhüllende darstellende Signal umfasst:

   - Leistung einer zweiten Mehrzahl von Signalen ($O_{ij}(t)$) die jeweils einen unterscheidbaren beschränkten Frequenzbandbreitenanteil des eine Einhüllende darstellenden Signals darstellt.

2. Verfahren nach Anspruch 1, **dadurch gekennzeichnet, dass** das Verfahren weiterhin für jedes eine Einhüllende darstellende Signal umfasst:

   - Leistung eines eine zeitmässig differenzierte Einhüllende darstellenden Signals, und
   - Leistung der zweiten Mehrzahl von Signalen ($O_{ij}(t)$) für jedes eine zeitmässig differenzierte Einhüllende darstellende Signal.

3. Verfahren nach einem der Ansprüche 1-2, **dadurch gekennzeichnet, dass** jedes eine Einhüllende darstellende Signal erreicht wird durch

   - Gleichrichtung des entsprechenden beschränkten Frequenzbandbreitenanteils des Eingangssignals und
   - Bandpass-Filtrierung des gleichgerichteten Signals.

4. Verfahren nach Anspruch 3, **dadurch gekennzeichnet, dass**

   - jedes der ersten Mehrzahl von Signalen, die je einen unterscheidbaren beschränkten Frequenzbandbreitenanteil des Eingangssignals darstellen, eine Bandbreite aufweist, die der Bandbreite eines Bandpass-Filters der menschlichen Innenohrschnecke entspricht.

5. Verfahren nach Anspruch 4, **dadurch gekennzeichnet, dass** die Bandbreiten der ersten Mehrzahl von Signalen Zentralfrequenzen von 1400 Hz bis 8500 Hz aufweisen.

6. Verfahren nach einem der Ansprüche 1-5, **dadurch gekennzeichnet, dass**

   - jedes der zweiten Mehrzahl der Signale ($O_{ij}(t)$) eine Zentralfrequenz von 300 Hz bis 3000 Hz aufweist.

7. Verfahren nach einem der Ansprüche 1-6, **dadurch gekennzeichnet, dass** jedes eine Einhüllende darstellende Signal durch Hilbert-Transformation des unterscheidbaren beschränkten entsprechenden Frequenzbandbreitenanteils des Eingangssignals erreicht wird.

8. Anwendung des Verfahrens nach einem der Ansprüche 1-7 zur Analyse eines menschlichen Sprachsignals.

9. Anwendung nach Anspruch 8 zur Identifikation von Vokalen in dem Sprachsignal.

10. Anwendung des Verfahrens nach einem der Ansprüche 1-3 zur Analyse eines durch ein Industrieprodukt erzeugten Signals.

**Revendications**

1. Procédé d'analyse d'un signal d'entrée (i(t)) ayant une largeur de bande de fréquence d'entrée, le procédé comprenant :

   - la fourniture d'une première pluralité de signaux représentant chacun une portion limitée de largeur de bande de fréquence distincte du signal d'entrée et
pour chacun de la première pluralité de signaux, l'exécution de l'étape suivante :

- la fourniture d'un signal représentant une enveloppe de ce dernier dans le domaine de temps,

**caractérisé en ce que** le procédé comprend en outre pour chaque signal représentant une enveloppe,
la fourniture d'une seconde pluralité de signaux $(O_{ij}(t))$ représentant chacun une portion limitée de largeur de bande de fréquence distincte du signal représentant une enveloppe.

2. Procédé selon la revendication 1, **caractérisé en ce que** le procédé comprend en outre pour chaque signal représentant une enveloppe,

- la fourniture d'un signal représentant une enveloppe différentiée dans le temps et

- pour chaque signal représentant une enveloppe, différentié dans le temps, la fourniture de la seconde pluralité de signaux $(O_{ij}(t))$.

3. Procédé selon l'une des revendications 1-2, **caractérisé en ce que** chaque signal représentant une enveloppe est obtenu par

- rectification de la portion limitée correspondante de largeur de bande de fréquence distincte du signal d'entrée et

- par filtrage passe-bas du signal rectifié.

4. Procédé selon la revendication 3, **caractérisé en ce que**

- chacun de la première pluralité de signaux représentant des portions limitées de largeur de bande de fréquence du signal d'entrée a une largeur de bande correspondant à une largeur d'un filtre passe-bas de la cochlée humaine.

5. Procédé selon la revendication 4, **caractérisé en ce que** les largeurs de bande de la première pluralité de signaux ont des fréquences centrales comprises entre 1400 Hz et 6500 Hz.

6. Procédé selon l'une quelconque des revendications 1 à 5, **caractérisé en ce que** chacun de la seconde pluralité de signaux $(O_{ij}(t))$ a une fréquence centrale comprise entre 300 Hz et 3000 Hz.

7. Procédé selon l'une quelconque des revendications 1 à 6, **caractérisé en ce que** chaque signal représentant une enveloppe est obtenu en effectuant une transformation Hilbert de la portion limitée correspondante de largeur de bande de fréquence distincte du signal d'entrée.

8. Utilisation du procédé selon l'une quelconque des revendications 1-7 pour l'analyse d'un signal vocal humain.

9. Utilisation selon la revendication 8 pour l'identification de vocales dans le signal vocal.

10. Utilisation du procédé selon l'une quelconque des revendications 1-3 pour l'analyse d'un signal généré par un produit industriel.

$$v_i(t) \longrightarrow \boxed{h(t)} \longrightarrow v_o(t)$$

# Fig. 1

3. Order, LP, 700 Hz, Butterworth

## Fig. 2

3. Order, LP, 700 Hz, Butterworth

Step frequency response.

Labels: Transient response, Input signal, Steady state response, ms

# Fig. 3

Fig. 4

**Fig. 5**

50 ms

Speech signal

Transient isolation in the speech signal, band width 2150-3550 Hz

Energy detection of the transient pulses by means of envelop detection,

rectified and low pass filtered at 700 Hz

# Fig. 6

| Sigma | Max | |
|---|---|---|
| 8250 | 0.931 | 0.81633 |
| 8500 | 0.964 | 0.81633 |
| 7750 | 0.989 | 0.81633 |
| 7000 | 1.000 | 0.81633 |
| 6250 | 0.993 | 0.81633 |
| 5500 | 0.960 | 0.81633 |
| 4750 | 0.895 | 0.81633 |
| 4000 | 0.855 | 0.90703 |
| 3250 | 0.757 | 0.90703 |
| 2500 | 0.610 | 0.99773 |

0                    2.00 ms

# Fig. 7

| Sigma | Max | |
|---|---|---|
| 9250 | 0.980 | 0.72562 |
| 8500 | 0.989 | 0.72562 |
| 7750 | 0.983 | 0.72562 |
| 7000 | 0.986 | 0.81633 |
| 6250 | 1.000 | 0.81633 |
| 5500 | 0.983 | 0.81633 |
| 4750 | 0.923 | 0.81633 |
| 4000 | 0.837 | 0.90703 |
| 3250 | 0.745 | 0.90703 |
| 2500 | 0.590 | 0.99773 |

0                                                   2.00 ms

# Fig. 8

| Sigma | Max | |
|---|---|---|
| 9250 | 0.883 | 0.81633 |
| 8500 | 0.908 | 0.81633 |
| 7750 | 0.931 | 0.81633 |
| 7000 | 0.953 | 0.81633 |
| 6250 | 0.974 | 0.81633 |
| 5500 | 0.992 | 0.81633 |
| 4750 | 1.000 | 0.81633 |
| 4000 | 0.984 | 0.81633 |
| 3250 | 0.940 | 0.90703 |
| 2500 | 0.851 | 0.90703 |

0

2.00 ms

# Fig. 9

| Sigma | Max | |
|---|---|---|
| 9250 | 0.890 | 0.54422 |
| 8500 | 0.917 | 0.54422 |
| 7750 | 0.944 | 0.54422 |
| 7000 | 0.971 | 0.54422 |
| 6250 | 0.992 | 0.54422 |
| 5500 | 1.000 | 0.54422 |
| 4750 | 0.982 | 0.54422 |
| 4000 | 0.977 | 0.63492 |
| 3250 | 0.912 | 0.63492 |
| 2500 | 0.795 | 0.72562 |

0       2.00 ms

# Fig. 10

| Sigma | | Max |
|---|---|---|
| 9250 | 0.965 | 0.99773 |
| 8500 | 0.984 | 0.99773 |
| 7750 | 0.995 | 0.99773 |
| 7000 | 1.000 | 0.99773 |
| 6250 | 0.998 | 0.99773 |
| 5500 | 0.989 | 0.99773 |
| 4750 | 0.968 | 0.99773 |
| 4000 | 0.964 | 1.08844 |
| 3250 | 0.920 | 1.08844 |
| 2500 | 0.831 | 1.17914 |

Fig. 11

| Sigma | | Max |
|---|---|---|
| 9250 | 0.983 | 0.81633 |
| 8500 | 0.994 | 0.81633 |
| 7750 | 0.995 | 0.81633 |
| 7000 | 0.986 | 0.81633 |
| 6250 | 0.994 | 0.90703 |
| 5500 | 1.000 | 0.90703 |
| 4750 | 0.989 | 0.90703 |
| 4000 | 0.953 | 0.99773 |
| 3250 | 0.922 | 0.99773 |
| 2500 | 0.859 | 1.08844 |

0                                                          2 00 ms

# Fig. 12

Fig. 13